(19) Europäisches Patentamt
European Patent Office
Office européen des brevets

(11) **EP 3 605 519 A1**

(12) **EUROPEAN PATENT APPLICATION**
published in accordance with Art. 153(4) EPC

(43) Date of publication:
**05.02.2020 Bulletin 2020/06**

(51) Int Cl.:
**G09G 5/00** *(2006.01)*          **G06F 3/14** *(2006.01)*
**G09G 5/36** *(2006.01)*

(21) Application number: **18777894.9**

(22) Date of filing: **23.01.2018**

(86) International application number:
**PCT/JP2018/001972**

(87) International publication number:
**WO 2018/179730 (04.10.2018 Gazette 2018/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **30.03.2017   JP 2017068971**

(71) Applicant: **Fujitsu Limited**
**Kawasaki-shi, Kanagawa 211-8588 (JP)**

(72) Inventors:
• **ITAKURA, Kota**
**Kawasaki-shi**
**Kanagawa 211-8588 (JP)**
• **YURA, Junichi**
**Kawasaki-shi**
**Kanagawa 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING SYSTEM, INFORMATION PROCESSING DEVICE AND INFORMATION PROCESSING METHOD**

(57)    To display content without inconsistency on a plurality of display screens even in a case where the plurality of display screens is not arranged on a plane.

At least one display 2 of a plurality of displays 2 is in a twisted connection relationship with another display 2. The information processing apparatus 1 stores, for each of the plurality of displays 2 that can be a reference for drawing from among the plurality of displays 2, the connection relationship for drawing with the other displays 2 connected to the display 2. The information processing apparatus 1 selects, upon reception of an instruction to draw predetermined content from communication equipment 3, a display that serves as a reference for drawing the content, determines a connection relationship with another display 2 connected upon drawing to the selected display 2, according to the connection relationship for drawing stored in the storage unit, divides an image of the content into images to be displayed on the respective displays according to the determined connection relationship, and causes the respective images to be drawn on the plurality of displays 2 according to the connection relationship.

FIG. 1

**Description**

TECHNICAL FIELD

The present invention relates to an information processing system and the like.

BACKGROUND ART

In recent years, UI (User Interface) technology for digitizing space is known (see, for example, Non-Patent Document 1). In such a space UI, one window system is constructed using large space such as a wall and a desk.

In addition, a display device is disclosed in which a plurality of display devices is connected to display one piece of image information (see, for example, Patent Document 1). Examples of the display device include electronic paper and a liquid crystal panel. A control unit of such a display device judges the adjacency mode of a plurality of display devices, judges the shared region configured of the display device including the control unit in the entire region configured of the plurality of display devices and the display direction, determines the range of image information displayed by the display device including the control unit according to the judged shared region and display direction, and causes a display unit of the display device including the control unit to display the range. Note that the display device has display direction priority for judging which of the display directions of the display devices is prioritized.

In addition, an electronic display device is disclosed in which a plurality of display screens are used to display content (see, for example, Patent Document 2).

CITATION LIST

PATENT DOCUMENT

Patent Document 1: Japanese Laid-open Patent Publication No. 2009-25466
Patent Document 2: Japanese Laid-open Patent Publication No. 2003-280622
Patent Document 3: Japanese Laid-open Patent Publication No. 2003-280783

NON-PATENT DOCUMENT

Non-Patent Document 1: S. Izadi, et al., "Dynamo: a public interactive surface supporting the cooperative sharing and exchange of media" In Proc. of UIST' 03. ACM, 159-168, 2003.

SUMMARY OF INVENTION

TECHNICAL PROBLEM

However, in a case where a plurality of display screens is not arranged on a plane, there is a problem that content is displayed inconsistently depending on the location where the content is displayed.

For example, there is a case where a plurality of display devices is not connected to each other on a plane but is connected in a twisted manner. In such a case, although a control unit of a conventional display device judges the adjacency mode of the plurality of display devices, it is difficult to correctly judge the adjacency mode of the twisted display devices, and the entire region configured of the plurality of display devices cannot be correctly judged. As a result, it is difficult for the control unit of the display device to display image information on the plurality of display devices without inconsistency.

In addition, even in a case where a plurality of display screens in lieu of a plurality of display devices is not connected on a plane but is connected in a twisted manner, similarly to the case of a plurality of display devices connected in a twisted manner, it is difficult to display content without inconsistency.

In addition, in space UI, there is a case where a wall and a desk are used as display screens, respectively; however, even in such a case, if the display screens are connected in a twisted manner, similarly to the plurality of display devices connected in a twisted manner, it is difficult to display content without inconsistency.

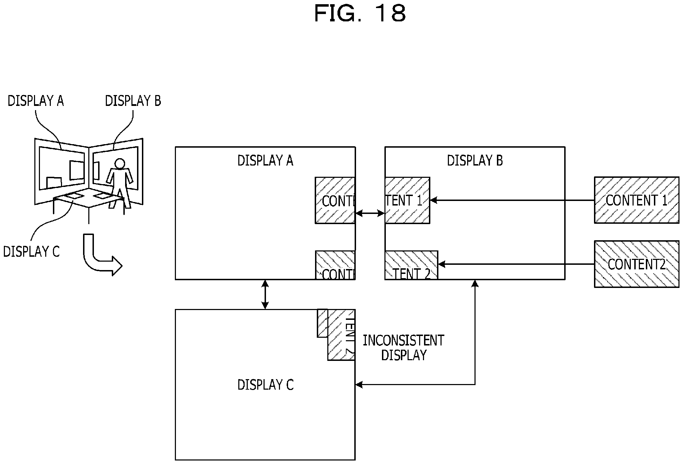

Here, an example in which display of content is inconsistent in a case of using walls and a desk as display screens (displays) will be described with reference to FIG. 18. FIG. 18 is a diagram illustrating an example in which display of content is inconsistent. As illustrated in FIG. 18, walls are used for a display A and a display B. A desk is used for a display C. The display A and the display B are twisted by 90 degrees. The display A and the display C are twisted by 90 degrees. The display B and the display C are twisted by 90 degrees. Under such a situation, a control unit of a display device judges adjacency modes of the plurality of displays A, B, and C. However, the control unit of the display device cannot correctly judge the adjacency modes because the plurality of displays A, B, and C are connected in a twisted manner. Then, the control unit of the display device displays a portion of the content on one display so as to overlap with another portion. That is, the content is displayed inconsistently.

In one aspect, it is an object to display content without inconsistency on a plurality of display screens even in a case where the plurality of display screens are not arranged on a plane.

SOLUTION TO PROBLEM

In one aspect, an information processing system includes an information processing apparatus, communication equipment that communicates with the information processing apparatus, and a plurality of displays that is connected to the information processing apparatus. At least one display of the plurality of displays is in a twisted connection relationship with another display. The information processing apparatus includes: a storage unit that stores, for each display that has possibility of serving as a reference for drawing from among the plurality of displays, a connection relationship for drawing with another display connected to the display; a selecting unit that selects, upon reception of an instruction to draw predetermined content from the communication equipment, a display that serves as the reference for drawing the predetermined content; a determination unit that determines a connection relationship with another display connected upon drawing to the display selected by the selecting unit, according to the connection relationship for drawing stored in the storage unit; a dividing unit that divides an image of the content into images to be displayed on the respective plurality of displays according to the connection relationship determined by the determination unit; and a drawing unit that causes the respective images obtained by being divided by the dividing unit to be drawn, according to the connection relationship.

ADVANTAGEOUS EFFECTS OF INVENTION

According to one aspect, it is possible to display content without inconsistency on the plurality of display screens even in a case where the plurality of display screens is not arranged on a plane.

BRIEF DESCRIPTION OF DRAWINGS

FIG. 1 is a functional block diagram illustrating a configuration of an information processing system according to a first embodiment.
FIG. 2 is a diagram illustrating the concept of content drawing according to the first embodiment.
FIG. 3 is a diagram illustrating an example of the data structure of display information according to the first embodiment.
FIG. 4 is a diagram illustrating an example of the data structure of connection information according to the first embodiment.
FIG. 5 is a diagram illustrating an example of the data structure of primary display information according to the first embodiment.
FIG. 6 is a diagram illustrating an example of the data structure of content location information according to the first embodiment.
FIG. 7 is a diagram illustrating an example of calculation of the location of content on each display.
FIG. 8A is a diagram (1) illustrating an example of a flow of content drawing according to the first embodiment.
FIG. 8B is a diagram (2) illustrating an example of the flow of content drawing according to the first embodiment.
FIG. 8C is a diagram (3) illustrating an example of the flow of content drawing according to the first embodiment.
FIG. 9 is a diagram illustrating an example of primary display selection according to the first embodiment.
FIG. 10 is a diagram illustrating another example of primary display selection according to the first embodiment.
FIG. 11 is a diagram illustrating an example of content drawing in a case where a primary display is changed.
FIG. 12 is a diagram illustrating an exemplary flowchart of content drawing upon content creation according to the first embodiment.
FIG. 13 is a diagram illustrating an exemplary flowchart of content drawing upon content movement according to the first embodiment.
FIG. 14 is a functional block diagram illustrating a configuration of an information processing system according to a second embodiment.
FIG. 15 is a diagram illustrating an example of dynamic estimation of a display connection for drawing according to the second embodiment.
FIG. 16 is a diagram illustrating another example of dynamic estimation of a display connection for drawing according to the second embodiment.
FIG. 17 is a diagram illustrating an example of a computer for executing an information processing program.
FIG. 18 is a diagram illustrating an example in which display of content is inconsistent.

DESCRIPTION OF EMBODIMENTS

Embodiments of an information processing system, an information processing apparatus, and an information processing method disclosed in the present application will be described in detail with reference to the drawings below. Note that this invention is not limited to the embodiments.

[First Embodiment]

[Configuration of Information Processing System According to First Embodiment]

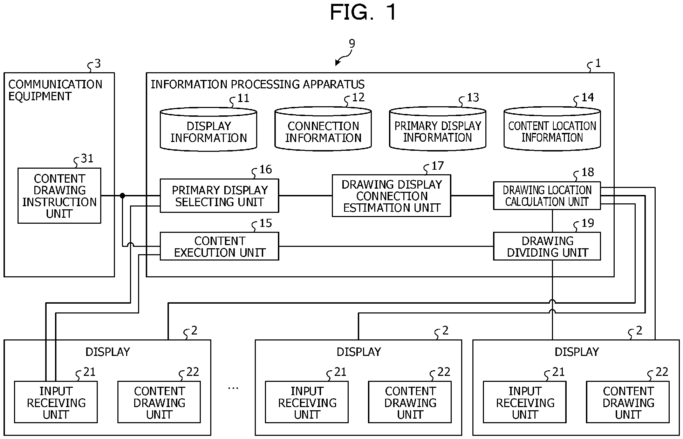

FIG. 1 is a functional block diagram illustrating a configuration of an information processing system according to a first embodiment. As illustrated in FIG. 1, the information processing system 9 includes an information processing apparatus 1 and communication equipment 3. In a case of displaying content on a plurality of displays 2 not arranged on a plane, the information processing apparatus 1 divides the image of the content into images to be displayed on the respective displays 2 according to the connection relationship between a display 2 serving as a reference for displaying the content and another display 2 and performs drawing. Note that in the embodiments, the fact that a plurality of displays 2 is not arranged on a plane is referred to as "twisted".

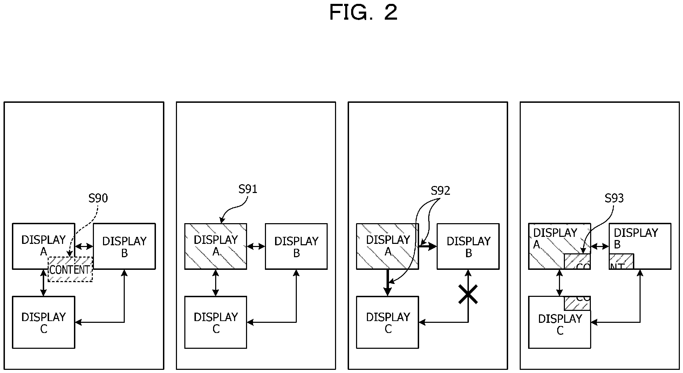

Here, the concept of content drawing according to the first embodiment will be described with reference to FIG. 2. FIG. 2 is a diagram illustrating the concept of content drawing according to the first embodiment. Note that in FIG. 2, it is assumed that at least one display 2 of the plurality of displays 2 is in a twisted connection relationship with another display 2.

As illustrated in FIG. 2, when the information processing apparatus 1 receives an instruction to generate or move content from the communication equipment 3 (S90), the information processing apparatus 1 selects the display 2 (referred to as "primary display") serving as a reference for displaying the content (S91). Here, a display A is selected as the primary display.

Then, the information processing apparatus 1 determines a connection of the display 2 which continuously performs drawing with reference to the selected primary display (S92). Here, the information processing apparatus 1 determines a connection with the display 2 which continuously performs drawing with reference to the selected primary display A to be a connection with a display B and a connection with a display C. A connection between the display B and the display C is not used for drawing. Note that it is sufficient that information on the connection with the display 2 to be used for drawing when the primary display A is used as a reference is set in advance.

Then, the information processing apparatus 1 divides the image of the content into images to be displayed on the respective displays 2 according to the connections for drawing, and draws the divided images on the respective displays 2 (S93). Here, by not using the connection between the display B and the display C for drawing, the information processing apparatus 1 can draw the content on the plurality of displays 2 without inconsistency.

Returning to FIG. 1, the information processing apparatus 1 causes a wall, a desk, and the like in space to function as the plurality of displays 2. In addition, the information processing apparatus 1 connects to the communication equipment 3. The communication equipment 3 has at least a wireless communication function, and corresponds to, for example, portable communication equipment such as a smartphone, a mobile phone, a PHS (Personal Handyphone System), or a PDA (Personal Digital Assistance). Wireless communication is, for example, WiFi (registered trademark) (Wireless Fidelity) or wireless communication of Bluetooth (registered trademark) standard; however, may be any as long as the wireless communication is short-distance wireless communication.

In addition, the information processing apparatus 1 stores display information 11, connection information 12, primary display information 13, and content location information 14 in a storage unit, not illustrated. The storage unit is a storage device such as a semiconductor memory element such as a random access memory (RAM) and a flash memory, a hard disk, or an optical disk.

The display information 11 is information for storing the size of the display 2 for each display 2. The size of the display 2 is indicated by width and height. Note that the display information 11 is set by a user in advance.

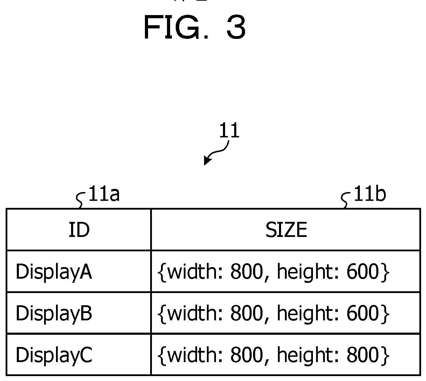

Here, an example of the data structure of the display information 11 will be described with reference to FIG. 3. FIG. 3 is a diagram illustrating an example of the data structure of display information according to the first embodiment. As illustrated in FIG. 3, the display information 11 stores an ID (identifier) 11a and a size 11b in association with each other. The ID 11a is an identifier for identifying the display 2. The size 11b indicates the width and height of the display 2. As an example, in a case where the ID 11a is "Display A", the width "800" and the height "600" are stored as the size 11b.

Returning to FIG. 1, the connection information 12 is information indicating the connection between the displays 2 used in drawing. The connection between the displays 2 is indicated by the corresponding two points on each of the displays 2. Note that connection information 12 is set in advance by the user.

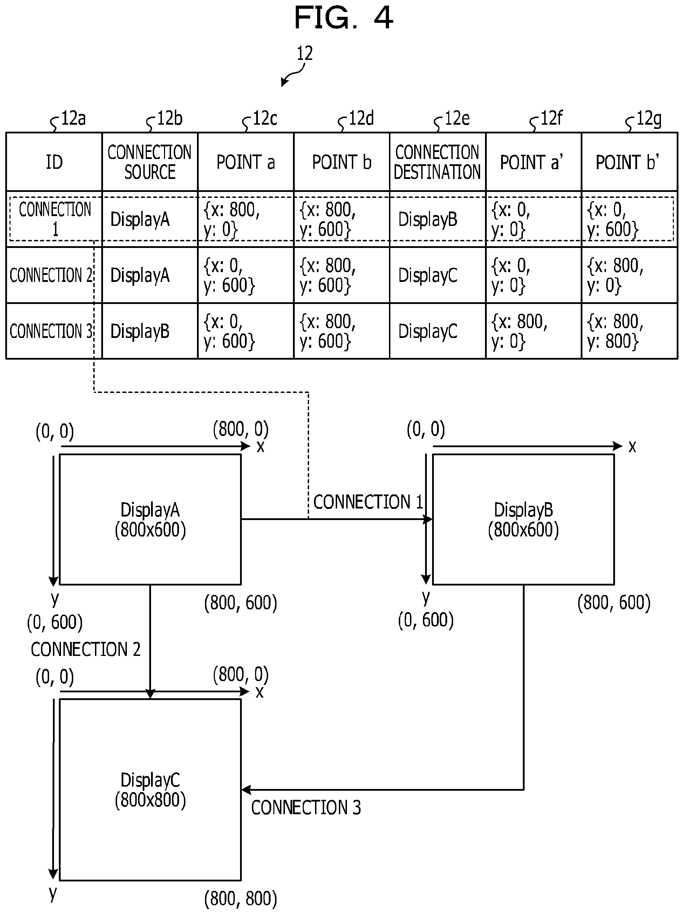

Here, an example of the data structure of the connection information 12 will be described with reference to FIG. 4. FIG. 4 is a diagram illustrating an example of the data structure of the connection information according to the first embodiment. As illustrated in FIG. 4, the connection information 12 stores an ID 12a, a connection source 12b, a point a12c, a point b12d, a connection destination 12e, a point a'12f and a point b'12g in association with one another. The ID 12a is an identifier for identifying the connection between the displays 2. The connection source 12b indicates the identifier of the display 2 of the connection source. The point a12c indicates the coordinates of one point of the display 2 of the connection source, used to indicate the connection between the displays 2. The point b12d indicates the coordinates of another point of the display 2 of the connection source, used to indicate the connection between the displays 2. Note that the coordinates are coordinates on the display 2 of the connection source. The connection destination 12e indicates the identifier of the display 2 of the connection destination. A point a'12f indicates the coordinates of one point of the display 2 of the connection destination used to indicate the connection between the displays 2. A point b'12g indicates the coordinates of another point of the display 2 of the connection destination, used to indicate the connection between the displays 2. The connection between the connection source 12b and the connection destination 12e is indicated by two corresponding points of the connection source 12b and the connection destination 12e, that is, the points a12c and b12d, the points a'12f and b'12g. Note that the coordinates are coordinates on the display 2 of the connection destination.

As an example, in a case where ID12a is "connection 1", "Display A" is stored as the connection source 12b, {x: 800, y: 0} is stored as the point a12c, and {x: 800, y: 600} is stored as the point b12d. In addition, "Display B" is stored as the connection destination 12e, {x: 0, y: 0} is stored as the point a'12f, and {x: 0, y: 600} is stored as the point b'12g. That is, as illustrated in the lower part of FIG. 4, "connection 1" indicates the connection between the Display A and the Display B. The connection source is the Display A and the connection destination is the Display B.

Returning to FIG. 1, the primary display information 13 is information indicating the connection to be used in drawing for each primary display. Here, the "primary display" refers to a display serving as a display reference. Note that the primary display information 13 is set by a user in advance in the first embodiment.

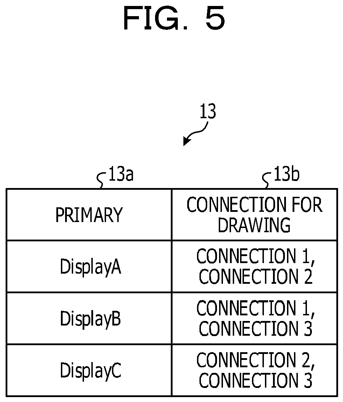

Here, an example of the data structure of the primary display information 13 will be described with reference to FIG. 5. FIG. 5 is a diagram illustrating an example of the data structure of the primary display information according to the first embodiment. As illustrated in FIG. 5, the primary display information 13 stores a primary 13a and connection 13b for drawing in association with each other. The primary 13a is an identifier for identifying a primary display. The connection 13b for drawing indicates the connection with a display to be used for drawing performed when the primary display is used as a reference. As an example, in a case where the primary 13a is "Display A", "connection 1" and "connection 2" are stored as the connection 13b for drawing. That is, as illustrated in the lower diagram of FIG. 4, in a case where the primary 13a is "Display A", "Connection 1" indicating the connection with Display B and "Connection 2" indicating the connection with Display C are used as connection used for drawing.

Returning to FIG. 1, the content location information 14 is information on the display location of the content in a case of displaying the content. Note that the content location information 14 is generated by the primary display selecting unit 16 described later when there is an instruction to draw content.

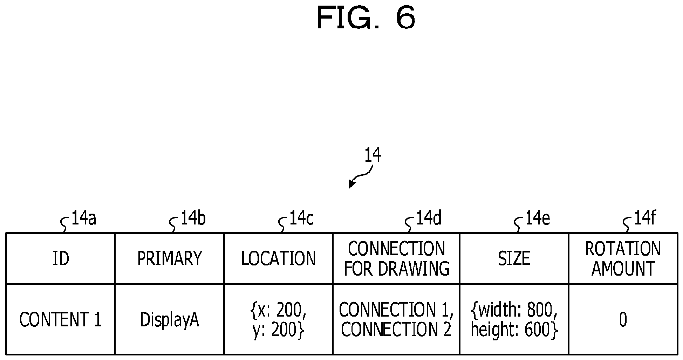

Here, an example of the data structure of the content location information 14 will be described with reference to FIG. 6. FIG. 6 is a diagram illustrating an example of the data structure of content location information according to the first embodiment. As illustrated in FIG. 6, the content location information 14 stores an ID 14a, a primary 14b, a location 14c, a connection 14d for drawing, a size 14e, and a rotation amount 14f in association with one another. The ID 14a is an identifier for identifying content. The primary 14b is an identifier of a primary display that displays content. The location 14c is the display location of the content on the primary display, and indicates the coordinates of one point. Note that coordinates are coordinates on the primary display. The connection 14d for drawing indicates the connections with the display used to draw content when the primary display is used as a reference. The connection 14d for drawing corresponds to the connection 13b for drawing of FIG. 5. The size 14e indicates the width and height of the content. The rotation amount 14f indicates the rotation amount of the content when the content is displayed.

As an example, in a case where the ID 14a is "content 1", "Display A" is stored as the primary 14b, {x: 200, y: 200} is stored as the location 14c, and "connection 1" and "connection 2" are stored as the connection 14d for drawing. In addition, as the size 14e, the width (800) and the height (600) are stored. In addition, "0" is stored as the rotation amount 14f.

Returning to FIG. 1, the information processing apparatus 1 includes a content execution unit 15, a primary display selecting unit 16, a drawing display connection estimation unit 17, a drawing location calculation unit 18, and a drawing dividing unit 19.

The content execution unit 15 generates a drawn image of content. For example, when the content execution unit 15 receives an instruction to draw content, the content execution unit 15 generates a drawn image of the target content, and outputs generated drawn image to the drawing dividing unit 19. Note that an instruction to draw content includes content of the content.

The primary display selecting unit 16 selects a primary display from among the plurality of displays 2. For example, upon reception of an instruction to draw content, the primary display selecting unit 16 selects a primary display according to designation of the primary display included in the instruction to draw the content. Note that the instruction to draw the content includes the display location, size, and rotation amount of the content in addition to designation of the primary display. Then, the primary display selecting unit 16 generates the content location information 14 from the information included in the instruction to draw the content and the primary display information 13. Then, the primary display selecting unit 16 outputs the generated content location information 14 to the drawing display connection estimation unit 17. Note that the instruction to draw the content includes an instruction to generate the content and an instruction to move the content.

The drawing display connection estimation unit 17 estimates the connection of the display 2 used for drawing from the primary display selected by the primary display selecting unit 16. For example, when the content location information 14 is input to the drawing display connection estimation unit 17, the drawing display connection estimation unit 17 obtains, from the primary display information 13, the connection 13b for drawing associated with the primary display indicated by the primary 14b included in the content location information 14. That is, the drawing display connection estimation unit 17 determines the connection for drawing to be used for drawing from the primary display selected by the primary display selecting unit 16. Then, the drawing display connection estimation unit 17 outputs the determined connection for drawing and content location information 14 to the drawing location calculation unit 18.

The drawing location calculation unit 18 calculates the drawing location of the content on each display 2. For example, the connection for drawing is input from the drawing display connection estimation unit 17 to the drawing location calculation unit 18, and the drawing location calculation unit 18 calculates the drawing location of the content on each display 2 from the input connection for drawing. As an example, the drawing location calculation unit 18 identifies the displays 2 of the connection source 12b and the connection destination 12e from the connection information 12 according to the connection for drawing, and arranges the displays 2 on an identical plane. The content location information 14 is input from the drawing display connection estimation unit 17 to the drawing location calculation unit 18, and obtains the location 14c, the size 14e, and the rotation amount 14f of the content from the input content location information 14. Then, the drawing location calculation unit 18 calculates the location of the content on each display 2 by using the location 14c of the content. In addition, the drawing location calculation unit 18 calculates the display region of the content on each display 2 according to the calculated location of the content on each display 2, the size 14e and the rotation amount 14f of the content.

The display region of the content on the display 2 is a region of a portion where the rectangle indicated by the display 2 and the rectangle indicated by the content overlap with each other. The region of the portion where the rectangle indicated by the display 2 and the rectangle indicated by the content overlap with each other is the region surrounded by apexes of the rectangles included in the other rectangles and the intersections of the rectangles. Note that any conventional calculation method may be used to calculate this region.

In addition, for the location of the content on each display 2, for example, an affine transformation indicating coordinate transformation between the displays 2 may be used.

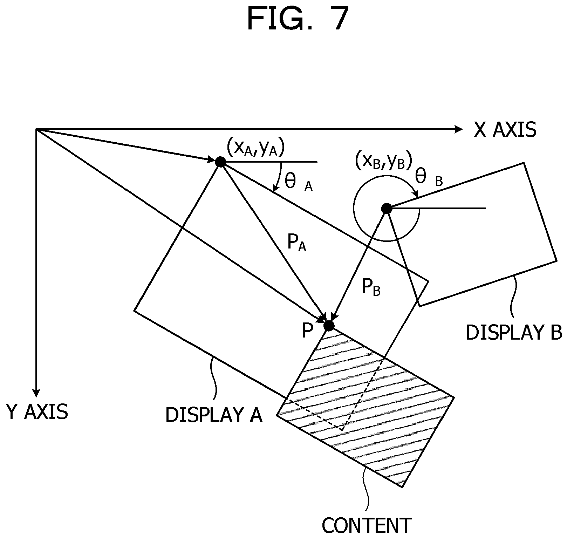

Here, an example of calculation of the location of the content on each display 2 will be described with reference to FIG. 7. FIG. 7 is a diagram illustrating an example of calculation of the location of content on each display. Note that in FIG. 7, a case will be described where the location of content on the display B is calculated assuming that the display A is the primary display.

As illustrated in FIG. 7, the drawing location calculation unit 18 arranges the display A and the display B on an identical plane. Here, $(x_A, y_A)$ are coordinates of the reference point of the display A in the absolute coordinate system. $(x_B, y_B)$ are coordinates of the reference point of the display B in the absolute coordinate system. $\theta_A$ is the rotation amount of the display A in the absolute coordinate system. $\theta_B$ is the rotation amount of the display B in the absolute coordinate system.

Then, the content location information 14 is input from the drawing display connection estimation unit 17 to the drawing location calculation unit 18, and obtains the location 14c of the content from the input content location information 14. Here, the point P is the location 14c of the content, and is the coordinates of the content on the display A. That is, a vector $P_A$ from $(x_A, y_A)$ to the point P is indicated by the coordinates of the point P on the display A.

Then, the drawing location calculation unit 18 calculates the location of the point P of the content on the display B by the following formula (1). Note that $(P_{Ax}, P_{Ay})$ is a vector $P_A$ from $(x_A, y_B)$ to the point P. $(P_{Bx}, P_{By})$ is a vector $P_B$ from $(x_B, y_B)$ to the point P, and is the location (coordinates) of the point P of the content on the display B.
[Mathematical Formula 1]

$$\begin{pmatrix} P_{Bx} \\ P_{By} \\ 1 \end{pmatrix} = \begin{pmatrix} \cos(-\theta_B) & -\sin(-\theta_B) & 0 \\ \sin(-\theta_B) & \cos(-\theta_B) & 0 \\ 0 & 0 & 1 \end{pmatrix} \begin{pmatrix} 1 & 0 & -x_B \\ 0 & 1 & -y_B \\ 0 & 0 & 1 \end{pmatrix} \begin{pmatrix} 1 & 0 & x_A \\ 0 & 1 & y_A \\ 0 & 0 & 1 \end{pmatrix} \begin{pmatrix} \cos(\theta_A) & -\sin(\theta_A) & 0 \\ \sin(\theta_A) & \cos(\theta_A) & 0 \\ 0 & 0 & 1 \end{pmatrix} \begin{pmatrix} P_{Ax} \\ P_{Ay} \\ 1 \end{pmatrix}$$

$$\cdots (1)$$

That is, the drawing location calculation unit 18 rotates the coordinates $(P_{Ax}, P_{Ay})$ on the display A by rotation $\theta_A$ of the display A. Then, the drawing location calculation unit 18 moves by the location $(x_A, y_A)$ of the display A. Furthermore, the drawing location calculation unit 18 moves to the location $(x_B, y_B)$ of the display B, and when the drawing location calculation unit 18 rotates by the rotation $\theta_B$ of the display B, coordinates on the display B are obtained.

Thereafter, the drawing location calculation unit 18 calculates the display regions of the content on each display 2 according to the calculated location of the content on each display 2, the size 14e and the rotation amount 14f of the content.

Returning to FIG. 1, the drawing dividing unit 19 divides the drawing image of the content generated by the content execution unit 15 according to the display region on each display 2 calculated by the drawing location calculation unit 18. Then, the drawing dividing unit 19 transmits the divided drawing images together with the drawing locations to the respective displays 2 in charge of drawing.

The communication equipment 3 has a content drawing instruction unit 31.

The content drawing instruction unit 31 transmits an instruction to draw content to the information processing apparatus 1. For example, the content drawing instruction unit 31 transmits, to the information processing apparatus 1, an instruction to draw content including designation of the primary display, the display location, the size and the rotation amount of the content. The designation of the primary display, the display location, the size, and the rotation amount of the content are, for example, designated by the user.

The display 2 has an input receiving unit 21 and a content drawing unit 22.

When receiving input of operation to move content, the input receiving unit 21 transmits an instruction to move the content to the primary display selecting unit 16. In addition, when receiving input operation to change the content of the content, the input receiving unit 21 transmits a drawing instruction in the operation to change the content of the content to the content execution unit 15. The drawing instruction in the operation to change the content of the content includes the content of the content after the change operation. Note that the input receiving unit 21 corresponds to, for example, a touch panel.

When the content drawing unit 22 receives the drawing image and the drawing location transmitted from the drawing dividing unit 19, the content drawing unit 22 draws the received drawing image at the received drawing location.

[Example of Flow of Content Drawing]

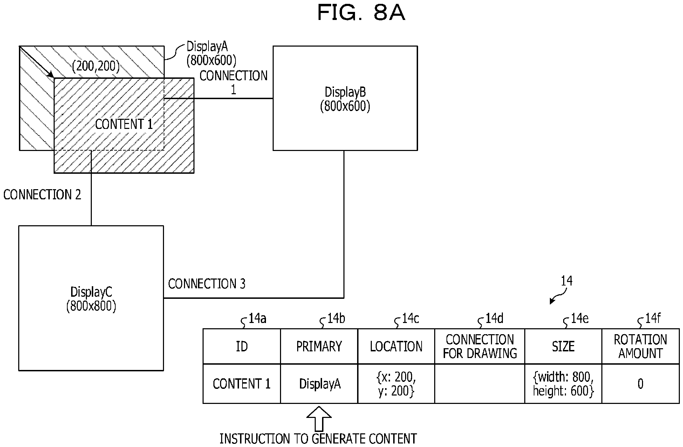

FIGS. 8A to 8C are diagrams illustrating an example of the flow of content drawing according to the first embodiment. Note that it is assumed that the primary display selecting unit 16 receives an instruction to generate content from the content drawing instruction unit 31. The content generation instruction includes, in addition to an instruction to set the primary display to "Display A", an instruction to set the display location of the content to (200, 200) and set the width to 800 and the height to 600 as the size of the content.

For example, as illustrated in FIG. 8A, the primary display selecting unit 16 selects "Display A" as the primary display according to designation of the primary display included in the instruction to generate the content. Then, the primary display selecting unit 16 generates the content location information 14 from the instruction to generate the content. Here, in the content location information 14, "content 1" is set as the ID 14a, "Display A" is set as the primary 14b, and {x: 200, y: 200} is set as the location 14c. In addition, as the size 14e, a width "800" and a height "600" are set. Further, "0" is set as the rotation amount 14f.

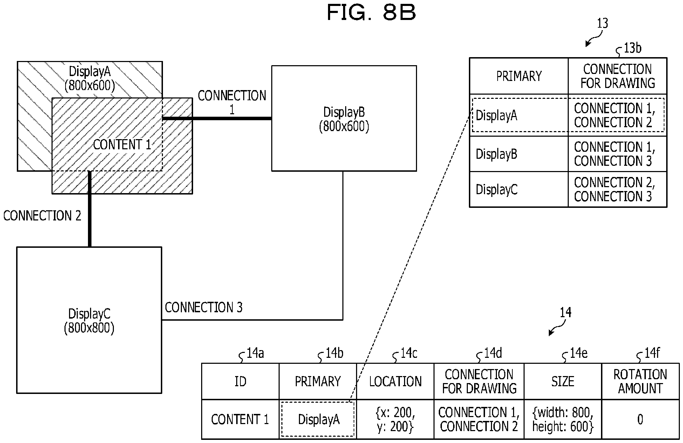

As illustrated in FIG. 8B, the drawing display connection estimation unit 17 obtains, from the primary display information 13, the connection 13b for drawing associated with the selected primary display "Display A". Here, "connection 1, connection 2" are obtained as the connection 13b for drawing. That is, "Display A" and "Display B" are connected. "Display A" and "Display C" are connected.

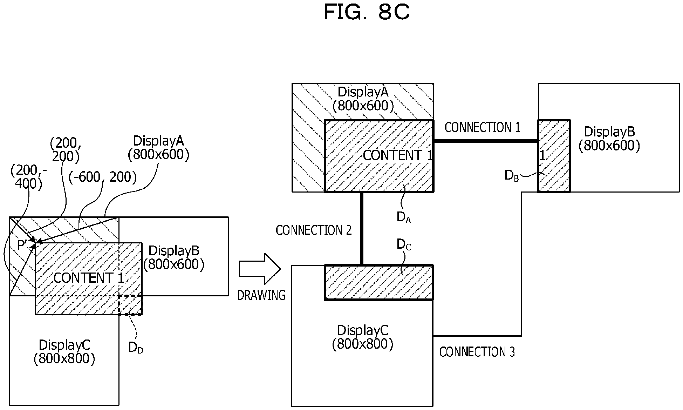

As illustrated in FIG. 8C, the drawing location calculation unit 18 identifies the displays 2 of the connection source 12b and the connection destination 12e from the connection information 12 according to the connections for drawing, and arranges the displays 2 on an identical plane. Then, the drawing location calculation unit 18 obtains the location 14c, the size 14e, and the rotation amount 14f of the content from the content location information 14. Here, the location 14c of the content is {x: 200, y: 200}. The size 14e of the content is "800" as the width and "600" as the height. The content rotation amount 14f is "0".

Then, the drawing location calculation unit 18 calculates the location of the content on each display 2 by using the location 14c of the content. For the location of the content on each display 2, for example, an affine transformation may be used as coordinate transformation between the displays 2 as indicated by the formula (1). Here, the location P' of the content in "Display A" is (200, 200) which is the location 14c of the content. Then, the location P' of the content in "Display B" is calculated as (-600, 200). The location P' of the content in "Display C" is calculated as (200, -400).

Then, the drawing location calculation unit 18 calculates the display region of the content on each display 2 according to the calculated location of the content on each display 2, the size 14e and the rotation amount 14f of the content. Here, the display region of the content in "Display A" is a region indicated by a reference sign $D_A$. The display region of the content in "Display B" is the region indicated by a reference sign $D_B$. The display region of the content in "Display C" is the indicated by a reference sign $D_C$. Note that even though the region indicated by the reference sign $D_D$ is a region included in the content, since "Display B" and "Display C" are not connected, the region is not displayed. Thereby, the drawing location calculation unit 18 can prevent part of the content from overlapping with another part of the identical content on one display. That is, the drawing location calculation unit 18 can prevent content from being displayed inconsistently.

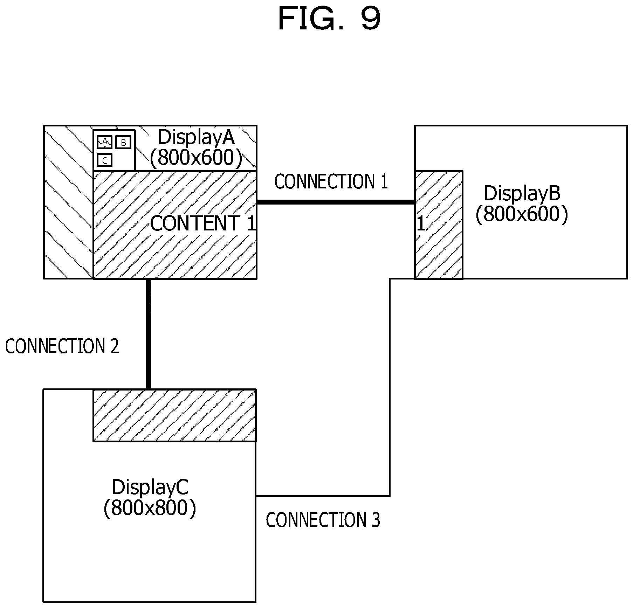

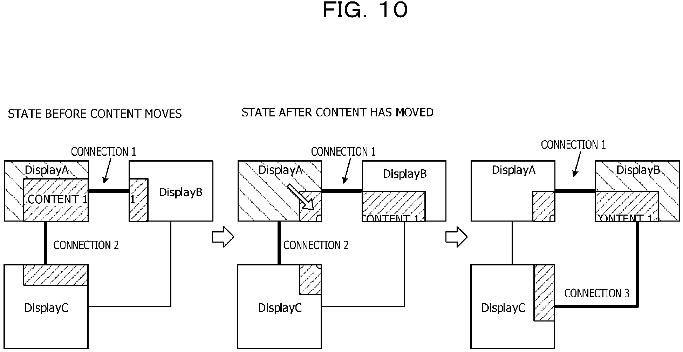

Note that in the first embodiment, a description will be given in which when the primary display selecting unit 16 receives an instruction to draw content from the content drawing instruction unit 31 of the communication equipment 3, the primary display selecting unit 16 selects a primary display according to designation of the primary display included in the instruction to draw the content. However, the primary display selecting unit 16 is not limited to this. In a case where an instruction to change the primary display is received from the display 2, the primary display selecting unit 16 may select the primary display according to the instruction to change the primary display. In addition, the primary display selecting unit 16 may select the display 2 with the largest drawing area in a case of drawing content on a plurality of displays 2, as the primary display. In FIG. 9, as an example of primary display selection, a case where the primary display is selected according to the instruction to change the primary display from the display 2 will be described. In FIG. 10, as another example of primary display selection, a case where the display 2 with the largest drawing area is selected as the primary display will be described.

[Example of Selection of Primary Display]

FIG. 9 is a diagram illustrating an example of primary display selection according to the first embodiment.

As illustrated in FIG. 9, the primary display selecting unit 16 displays selection buttons for selecting the primary displays on the current primary display. Note that the timing for displaying the selection buttons may be any time as long as the timing is after the drawn image of the content is drawn on each display 2. Here, the selection buttons are displayed on the primary display "Display A". As the selection buttons, an "A" button indicating "Display A", a "B" button indicating "Display B", and a "C" button indicating "Display C" exist.

For example, in a case where the primary display is changed from "A" to "B", the "B" button of the selection button is pressed. Then, the input receiving unit 21 receives input of an instruction to change the primary display, and transmits the change instruction of the primary display to the primary display selecting unit 16. Thereafter, the primary display selecting unit 16 changes the primary display to "B" according to the instruction to change the primary display.

[Another Example of Primary Display Selection]

FIG. 10 is a diagram illustrating another example of primary display selection according to the first embodiment.

As illustrated in FIG. 10, in the state before content moves, "Display A" is the primary display. Then, "connection 1, connection 2" is obtained as the connection 13b for drawing. That is, "Display A" and "Display B" are connected. "Display A" and "Display C" are connected.

Here, when the input receiving unit 21 receives input of operation to move content in a state after the content has moved, the input receiving unit 21 transmits an instruction move the content to the primary display selecting unit 16. The primary display selecting unit 16 calculates the display location after operation to move the content according to the instruction to move the content. The primary display selecting unit 16 calculates the display area of the content on each display 2 after the content has moved. The primary display selecting unit 16 selects the display 2 with the largest display area as the primary display. Here, the content display area in "Display B" is larger than that of "Display A" and "Display C". That is, the primary display selecting unit 16 selects "Display B" having the largest display area as the primary display.

Thereafter, the drawing display connection estimation unit 17 obtains, from the primary display information 13, the connection 13b for drawing associated with the selected primary display "Display B". Here, "connection 1, connection 3" are obtained as the connection 13b for drawing. The drawing location calculation unit 18 calculates the display region on each display 2 from the connection 13b for drawing. The drawing dividing unit 19 divides the drawn image of the content according to the display region in each display 2 and draws the divided drawn image on each display 2.

[Example of Content Drawing in case of Changing Primary Display]

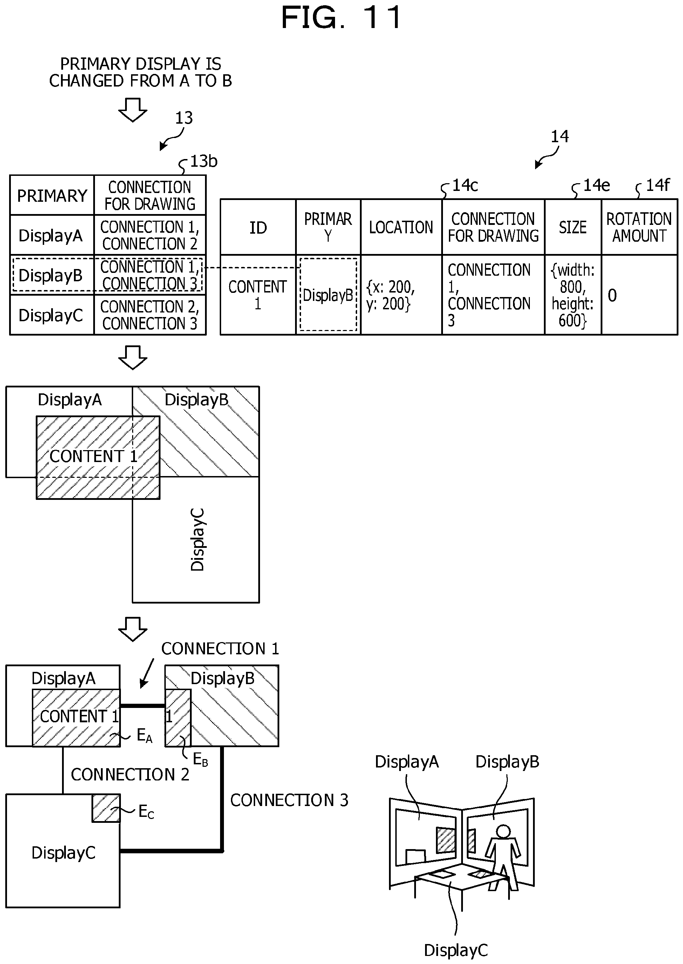

Here, an example of content drawing in a case of changing the primary display will be described with reference to FIG. 11. FIG. 11 is a diagram illustrating an example of content drawing in a case of changing the primary display. Note that in FIG. 11, it is assumed that the primary display is changed from "Display A" to "Display B" using a selection button.

Then, the primary display selecting unit 16 changes the primary display from "Display A" to "Display B" according to an instruction to change the primary display.

Then, the drawing display connection estimation unit 17 obtains the connection 13b for drawing associated with the selected primary display "Display B" from the primary display information 13. Here, "connection 1, connection 3" are obtained as the connection 13b for drawing. That is, "Display B" and "Display A" are connected. "Display B" and "Display C" are connected.

Then, the drawing location calculation unit 18 arranges the displays 2 of the connection source 12b and the connection destination 12e on an identical plane from the connection information 12, according to the connections for drawing. Then, the drawing location calculation unit 18 obtains the location 14c, the size 14e, and the rotation amount 14f of the content from the content location information 14. Here, the location 14c of the content is {x: 200, y: 200}. The size 14e of the content is "800" as the width and "600" as the height. The content rotation amount 14f is "0".

Then, the drawing location calculation unit 18 calculates the location of the content on each display 2 by using the location 14c of the content. For the location of the content on each display 2, for example, an affine transformation may be used as coordinate transformation between the displays 2 as indicated by the formula (1). Then, the drawing location calculation unit 18 calculates the display region of the content on each display 2 according to the calculated location of the content on each display 2, the size 14e and the rotation amount 14f of the content. Here, the display region of the content in "Display A" is a region indicated by a reference sign $E_A$. The display region of the content in "Display B" is a region indicated by a reference sign $E_B$. The display region of the content in "Display C" is a region indicated by a reference sign $E_C$.

Note that since the connection (connection 2) between "Display A" and "Display C" is not established, the region included in the content protruding in the direction from the "Display A" to "Display C" is not displayed in the "Display C". Thereby, the drawing location calculation unit 18 can prevent part of the content from overlapping with another part of the identical content on one display. That is, the drawing location calculation unit 18 can prevent content from being displayed inconsistently.

[Flowchart of Content Drawing upon of Content Generation]

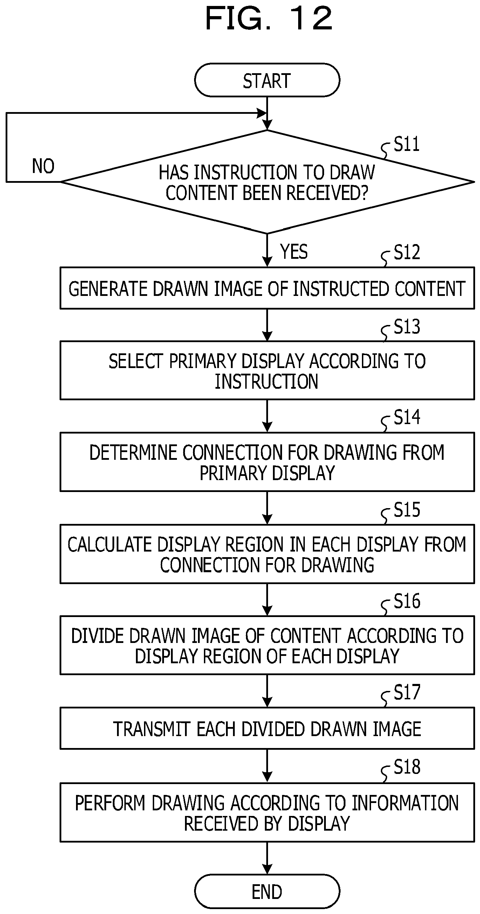

Here, a flowchart of content drawing upon content generation will be described with reference to FIG. 12. FIG. 12 is a diagram illustrating an example of a flowchart of content drawing upon content generation according to the first embodiment.

As illustrated in FIG. 12, the content execution unit 15 judges whether or not an instruction to draw content has been received (step S11) In a case where it is judged that the instruction to draw the content has not been received (step S11; No), the content execution unit 15 repeats a judging process until the instruction to draw the content is received.

In contrast, in a case where it is judged that the instruction to draw the content has been received (step S11; Yes), the content execution unit 15 generates a drawn image of the instructed content (step S12).

Then, the primary display selecting unit 16 that has received the instruction to draw the content selects the primary display according to the instruction to draw the content (step S13). For example, the primary display selecting unit 16 selects the primary display according to designation of the primary display included in the instruction to draw the content. Then, the primary display selecting unit 16 generates content location information 14 from the selected primary display and the display location, the size, and the rotation amount of the content included in the instruction to draw the content.

Then, the drawing display connection estimation unit 17 determines the connection for drawing from the selected primary display (step S14). For example, the drawing display connection estimation unit 17 obtains, from the primary display information 13, the connection 13b for drawing associated with the selected primary display. Then, the drawing display connection estimation unit 17 stores information of the acquired connection for drawing in the connection 14d for drawing of the content location information 14.

Then, the drawing location calculation unit 18 calculates the display region on each display 2 from the determined connection for drawing (step S15). For example, the drawing location calculation unit 18 identifies the displays of the connection source 12b and the connection destination 12e from the connection information 12 according to the obtained connection 13b for drawing, and arranges the identified displays 2 on an identical plane. Then, the drawing location calculation unit 18 calculates the location of the content on each display 2 by using a location 14c of the content of the content location information 14. Then, the drawing location calculation unit 18 calculates the display region of the content on each display 2 according to the calculated location of the content on each display 2, the size 14e and the rotation amount 14f of the content of the content location information 14.

Then, the drawing dividing unit 19 divides the drawn image of the content generated by the content execution unit 15 according to the calculated display region on each display 2 (step S16). Then, the drawing dividing unit 19 transmits the divided drawing images together with the drawing locations to the respective displays 2 in charge of drawing. (Step S17).

Then, on the display 2, the content drawing unit 22 performs drawing according to the received drawn image and drawing location (step S18). For example, the content drawing unit 22 draws the received drawn image at the received drawing location.

[Flowchart of Content Drawing upon Content Movement]

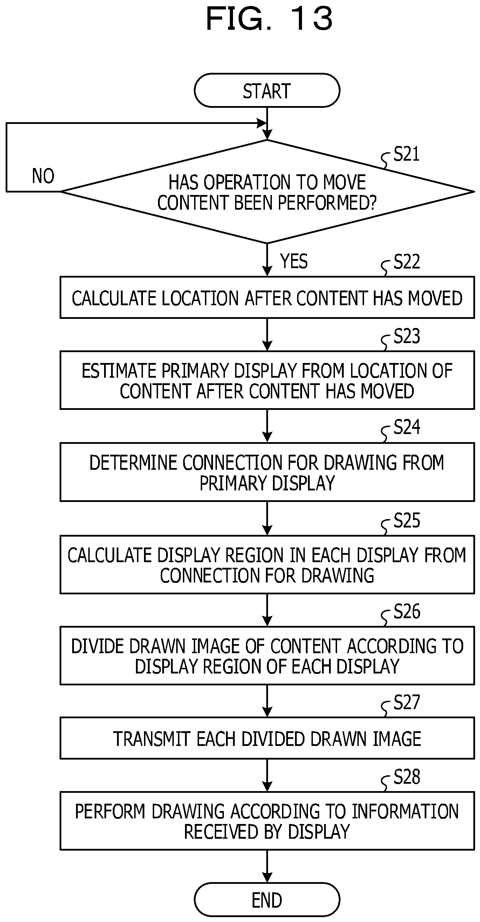

Next, a flowchart of content drawing upon content movement will be described with reference to FIG. 13. FIG. 13 is a diagram illustrating an example of a flowchart of content drawing upon content movement according to the first embodiment. Note that, in FIG. 13, a case where the display 2 with the largest drawing area is selected as the primary display will be described.

As illustrated in FIG. 13, the primary display selecting unit 16 judges whether or not operation to move the content has been performed (step S21). In a case where it is judged that the operation to move the content has not been performed (Step S21; No), the primary display selecting unit 16 repeats a judging process until the operation to move the content is performed.

In contrast, in a case where it is judged that the operation to move the content has been performed (step S21; Yes), the primary display selecting unit 16 calculates the display location after the operation to move the content (step S22).

Then, the primary display selecting unit 16 estimates the primary display from the display location after the operation to move the content (step S23). For example, the primary display selecting unit 16 calculates the display area of the content on each display 2 according to the display location after the operation to move the content. The primary display selecting unit 16 selects the display 2 with the largest display area as the primary display. Then, the primary display selecting unit 16 updates the selected primary display and display location of the content with respect to the content location information 14 for the content which has been moved.

Then, the drawing display connection estimation unit 17 determines the connection for drawing from the selected primary display (step S24). The method of determining the connection for drawing is similar to the case of the content drawing upon content generation, and therefore the description thereof is omitted.

Then, the drawing location calculation unit 18 calculates the display region on each display 2 from the determined connection for drawing (step S25). The method of calculating the display region is similar to the case of the content drawing upon content generation, and therefore the description thereof is omitted.

Then, the drawing dividing unit 19 divides the drawn image of the content generated by the content execution unit 15 according to the calculated display region on each display 2 (step S26). Then, the drawing dividing unit 19 transmits the divided drawing images together with the drawing locations to the respective displays 2 in charge of drawing. (Step S27).

Then, on the display 2, the content drawing unit 22 performs drawing according to the received drawn images and drawing locations (step S28). For example, the content drawing unit 22 draws the received drawn image at the received drawing location.

[Effect of First Embodiment]

As described above, in the above first embodiment, the information processing system 9 includes the information processing apparatus 1, the communication equipment 3, and the plurality of displays 2. At least one display 2 of the plurality of displays 2 is in a twisted connection relationship with another display 2. The information processing apparatus 1 stores, for each of the plurality of displays 2 that can be a reference for drawing from among the plurality of displays 2, the connection relationship for drawing with the other displays 2 connected to the display 2. When the information processing apparatus 1 receives an instruction to draw predetermined content from the communication equipment 3, the information processing apparatus 1 selects a display serving as a reference for drawing the content. The information processing apparatus 1 determines the connection relationship between the selected display 2 and another display 2 connected upon drawing, from the connection relationship for drawing stored in the storage unit. The information processing apparatus 1 divides the image of the content into an image to be displayed on each display according to the determined connection relationship. The information processing apparatus 1 causes each of the divided images to be drawn on the plurality of displays according to the connection relationship. According to such a configuration, even if the displays 2 are in a twisted connection relationship, the information processing apparatus 1 performs drawing on the display 2 in the connection relationship for drawing associated with the display 2 serving as a reference for drawing the content.

Therefore, drawing without inconsistency can be realized. That is, the information processing apparatus 1 can prevent part of the content from overlapping with another part of the identical content on one display.

In addition, in the above first embodiment, the information processing apparatus 1 selects a display serving as a reference for drawing the content according to designation of the display included in a drawing instruction. According to such a configuration, the information processing apparatus 1 can easily change the display 2 serving as the reference of drawing of content to the display 2 desired by the user.

In addition, in the above first embodiment, the information processing apparatus 1 selects, as the display 2 serving as the reference for drawing the content, the display 2 having the largest drawing area in a case of drawing the content on the plurality of displays 2. According to such a configuration, the information processing apparatus 1 can dynamically change the display 2 serving as a reference for drawing the content by using the area where the content is drawn on the display 2 even when the content is moved.

[Second Embodiment]

Incidentally, in the first embodiment, a description has been given in which the primary display information 13 indicating the connection used for drawing is set in advance by the user for each primary display. However, such primary display information 13 may be set dynamically.

Therefore, in the second embodiment, a case where primary display information 13 is dynamically set will be described.

[Configuration of Information Processing System According to Second Embodiment]

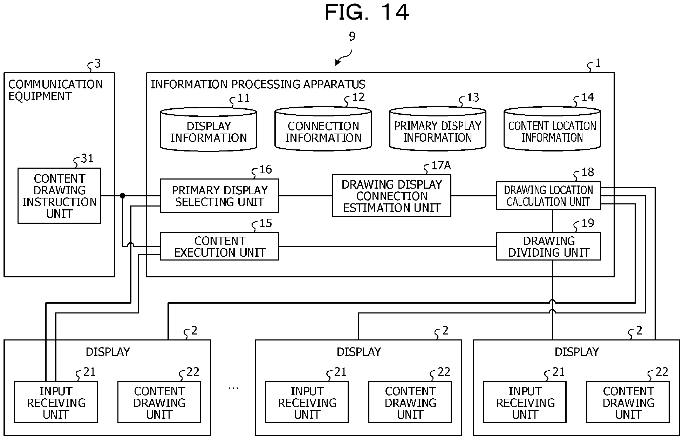

FIG. 14 is a functional block diagram illustrating a configuration of an information processing system according to a second embodiment. Note that configurations identical to those of the information processing system 9 illustrated in FIG. 1 are denoted by identical reference signs, and the description of the overlapping configurations and operation will be omitted. The difference between the first embodiment and the second embodiment is that the drawing display connection estimation unit 17 is changed to a drawing display connection estimation unit 17A.

The drawing display connection estimation unit 17A estimates a display connection for drawing. Note that an estimation process of the display connection for drawing is executed before operation of a content drawing process.

As an example, the drawing display connection estimation unit 17A selects one display 2 from among a plurality of displays 2 as a primary display. The drawing display connection estimation unit 17A refers to the connection information 12 and estimates display connection for drawing according to width-first search from the display 2 selected as the primary display. That is, the drawing display connection estimation unit 17A refers to the connection information 12 and searches for the display 2 connected by one connection from the display 2 selected as the primary display. Further, the drawing display connection estimation unit 17A searches for the display 2 connected by one connection from the display 2 of the connection destination. However, the drawing display connection estimation unit 17A does not adopt a connection to the display 2 already searched for. Then, the drawing display connection estimation unit 17A repeats the search process until all the displays 2 are searched for, and stores the adopted connections in the primary display information 13, as connections for drawing corresponding to the primary display. Note that the drawing display connection estimation unit 17A searches for connections for drawing for all the displays 2 and stores the connections for drawing in the primary display information 13.

As another example, the drawing display connection estimation unit 17A selects one display 2 from among a plurality of displays 2 as a primary display. The drawing display connection estimation unit 17A refers to connection information 12 and estimates display connection for drawing according to the shortest route from the display 2 selected as the primary display. Note that it is assumed that in the connection information 12, a weighting corresponding to the distance measured according to the actual arrangement in space is set for each connection. Then, the drawing display connection estimation unit 17A repeats the search process by using the shortest route until all the displays 2 are searched for, and stores the adopted connections in the primary display information 13 as connection for drawing corresponding to the primary display. Note that the drawing display connection estimation unit 17A searches for connections for drawing for all the displays 2 and stores the connections for drawing in the primary display information 13.

In addition, the drawing display connection estimation unit 17A estimates the connection of the display 2 to be used for drawing from the primary display selected by the primary display selecting unit 16. The process of estimating the connection for drawing from the primary display is similar to the process of the drawing display connection estimation unit 17, and thus the description thereof is omitted.

[Example of Dynamic Estimation of Display Connection for Drawing]

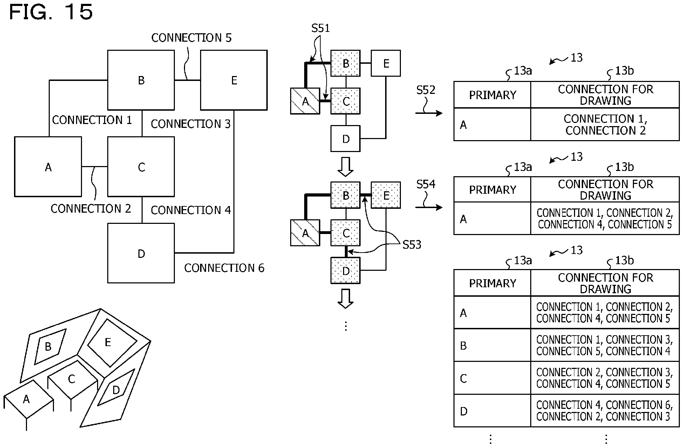

Here, an example of dynamically estimating a display connection for drawing according to the width-first search will be described with reference to FIG. 15. FIG. 15 is a diagram illustrating an example of dynamic estimation of display connection for drawing according to a second embodiment. Note that it is assumed that "A", "B", "C", "D" and "E" illustrated in FIG. 15 are each an identifier of the display 2. In addition, it is assumed that the connection relationships illustrated in FIG. 15 are stored in connection information 12. In addition, it is assumed that "A" and "B", "B" and "C", and "C" and "D" are in twisted arrangement; however, the distance is 1.

Under such circumstances, the drawing display connection estimation unit 17A selects one display 2 from among the plurality of displays 2 as a primary display. Here, first, the drawing display connection estimation unit 17A selects "A" as the primary display.

Then, the drawing display connection estimation unit 17A refers to the connection information 12 and searches for a display 2 connected by one connection from "A" selected as the primary display. Here, "B" and "C" are searched for. Then, the drawing display connection estimation unit 17A adopts "connection 1" between "A" and "B" and "connection 2" between "A" and "C" (S51). Then, the drawing display connection estimation unit 17A stores the adopted connections in the column of the connection 13b for drawing of the record in which the primary 13a indicates "A" in the primary display information 13 (S52).

Further, the drawing display connection estimation unit 17A searches for the display 2 connected by one connection from the display 2 of the connection destination. Here, "E" connected by one connection from "B" of the connection destination and "D" connected by one connection from "C" of the connection destination are searched for. Then, the drawing display connection estimation unit 17A adopts "connection 5" between "B" and "E" and "connection 4" between "C" and "D" (S53). Note that since "C" connected by one connection from "B" of the connection destination is the display 2 already searched for, connection 3 from "B" to "C" is not adopted. Then, the drawing display connection estimation unit 17A stores the adopted connections in the column of the connection 13b for drawing of the record in which the primary 13a indicates "A" in the primary display information 13 (S54).

Then, the drawing display connection estimation unit 17A repeats the search process until all the displays 2 are searched for, and terminates the dynamic estimation process of the display connections for drawing corresponding to "A".

Then, the drawing display connection estimation unit 17A selects "B" to "E" in order as a primary display, searches for connections for drawing in a similar manner as in the case of "A", and stores the connections for drawing in the primary display information 13.

Thereby, the drawing display connection estimation unit 17A can dynamically estimate display connections for drawing according to the width-first search from the display 2 selected as the primary display.

[Another Example of Dynamic Estimation of Display Connection for Drawing]

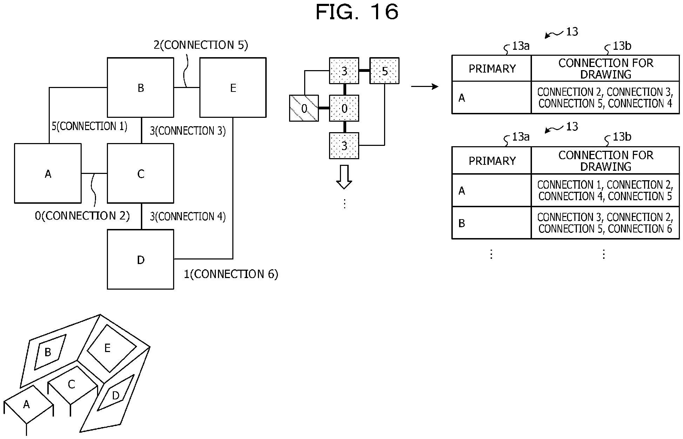

Here, another example of dynamically estimating display connections for drawing by using a width-first search will be described with reference to FIG. 16. FIG. 16 is a diagram illustrating another example of the dynamic estimation of display connections for drawing according to the second embodiment. Note that it is assumed that the connection relationships of the displays 2 are similar to that in the case of FIG. 15. In addition, it is assumed that "A" and "B", "B" and "C", "C" and "D", "D" and "E", and "B" and "E" are in twisted arrangement, respectively, and weightings according to the distance are 5, 3, 3, 1, 2 respectively. In addition, it is assumed that "A" and "C" are arranged on an identical plane, and weightings according to the distance are "0". Connection information 12 stores the connection relationships illustrated in FIG. 16 and also stores the weightings according to the distance. For each connection relationship, the connection ID is indicated in parentheses, and the weighting according to the distance is illustrated on the left of the parentheses.

Under such circumstances, the drawing display connection estimation unit 17A selects one display 2 from among the plurality of displays 2 as a primary display. Here, first, the drawing display connection estimation unit 17A selects "A" as the primary display.

Then, the drawing display connection estimation unit 17A refers to the connection information 12 and estimates the display connection for drawing according to the shortest route from "A". Here, the drawing display connection estimation unit 17A calculates "connection 2" between "A" and "C", "connection 3" between "C" and "B", "connection 5" between "B" and "E" and "connection 4" between "C" and "D". Then, the drawing display connection estimation unit 17A stores the adopted connections in the column of the connection 12b for drawing of the record in which primary 12a indicates "A" in primary display information 13.

Then, the drawing display connection estimation unit 17A selects "B" to "E" in order as a primary display, searches for connections for drawing in a similar manner as in the case of "A", and stores the connections for drawing in the primary display information 13.

Thereby, the drawing display connection estimation unit 17A can dynamically estimate the display connections for drawing according to the shortest route search from the display 2 selected as the primary display.

[Effect of Second Embodiment]

In this manner, in the above second embodiment, the information processing apparatus 1 estimates the connection relationship for drawing according to the width-first search from each display 2 for each of the displays 2 that can be the reference for drawing, from the connection relationships of the plurality of displays 2. According to such a configuration, the information processing apparatus 1 can dynamically estimate the display connections for drawing according to the width-first search from the primary display that can be a reference for drawing.

In addition, in the above second embodiment, the information processing apparatus 1 estimates the connection relationship for drawing according to search for the shortest distance from each display 2, for each display 2 that can be the reference for drawing, from the connection relationships of the plurality of displays 2. According to such a configuration, the information processing apparatus 1 can dynamically estimate the display connection for drawing according to the shortest route search from the primary display that can be the reference for drawing.

[Others]

Note that the information processing apparatus 1 can be realized by mounting, on an information processing apparatus such as a known personal computer or a work station, the content execution unit 15, the primary display selecting unit 16, the drawing display connection estimation unit 17, the drawing location calculation unit 18, the drawing dividing unit 19, and the like described above.

In addition, each component of the illustrated apparatus is not necessarily physically configured as illustrated in the drawings. That is, specific aspects of separation and integration of the apparatus are not limited to the illustrated ones, and all or a part of the apparatus can be functionally or physically separated and integrated in an arbitrary unit according to various loads and use states. For example, the drawing display connection estimation unit 17A may be separated into a first estimation unit that dynamically estimates a display connection for drawing, and a second estimation unit that estimates a connection of a display 2 used for drawing from a primary display.

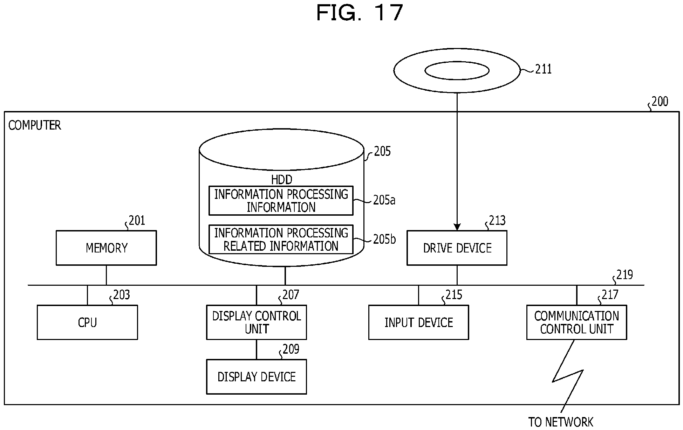

In addition, various sorts of processes described in the above embodiments can also be implemented by executing a program prepared in advance on a computer such as a personal computer or a work station. Therefore, in the following description, an example of the computer which executes an information processing program having a function similar to the information processing apparatus 1 illustrated in FIG. 1 will be described. FIG. 17 is a diagram illustrating an example of a computer for executing an information processing program.

As illustrated in FIG. 17, a computer 200 includes a CPU 203 that executes various calculation processing, an input device 215 that receives data input from a user, and a display control unit 207 that controls a display device 209. In addition, the computer 200 also includes a drive device 213 that reads a program or the like from a storage medium, and a communication control unit 217 that executes data with another computer via a network. In addition, the computer 200 also has a memory 201 that temporarily stores various information, and an HDD 205. Then, the memory 201, the CPU 203, the HDD 205, the display control unit 207, the drive device 213, the input device 215, and the communication control unit 217 are connected by a bus 219.

The drive device 213 is a device for a removable disk 211, for example.

The CPU 203 reads the information processing program 205a, loads the information processing program 205a into the memory 201, and executes the information processing program 205a as a process. Such a process corresponds to each functional unit of the information processing apparatus 1. Information processing related information 205b corresponds to information such as display information 11, connection information 12, and primary display information 13, stored in a storage unit, not illustrated, of the information processing apparatus 1. Then, for example, the removable disk 211 stores each piece of information such as the information processing program 205a.

Note that the information processing program 205a may not necessarily be stored in the HDD 205 from the beginning. For example, the program may be stored in a "portable physical medium" such as a flexible disk (FD), a CD-ROM, a DVD disk, a magneto-optical disk, or an IC card inserted in the computer 200. Then, the computer 200 may read the information processing program 205a from these media to execute the information processing program 205a.

REFERENCE SIGNS LIST

1     information processing apparatus
2     display
3     communication equipment
9     information processing system
11    display information

12 connection information
13 primary display information
14 content information
15 content execution unit
16 primary display selecting unit
17 drawing display connection estimation unit
18 drawing location calculation unit
19 drawing dividing unit
21 input receiving unit
22 content drawing unit
31 content drawing instruction unit

**Claims**

1. An information processing system comprising:

   an information processing apparatus;
   communication equipment that communicates with the information processing apparatus; and
   a plurality of displays that is connected to the information processing apparatus,
   at least one display among the plurality of displays being in a twisted connection relationship with another display, and
   the information processing apparatus including:

      a storage unit that stores, for each display that has possibility of serving as a reference for drawing from among the plurality of displays, a connection relationship for drawing with another display connected to the display;
      a selecting unit that selects, upon reception of an instruction to draw predetermined content from the communication equipment, a display that serves as the reference for drawing the predetermined content;
      a determination unit that determines a connection relationship with another display connected upon drawing to the display selected by the selecting unit according to the connection relationship for drawing stored in the storage unit;
      a dividing unit that divides an image of the predetermined content into images displayed on the respective displays according to the connection relationship determined by the determination unit; and
      a drawing unit that causes the respective images obtained by being divided by the dividing unit to be drawn on the plurality of displays according to the connection relationship.

2. The information processing system according to claim 1, wherein the selecting unit selects a display that serves as the reference for drawing the predetermined content, according to designation of a display included in the instruction to draw the predetermined content.

3. The information processing system according to claim 1 wherein the selecting unit selects a display that has largest drawing area in a case of drawing the predetermined content on the plurality of displays as a display that serves as the reference for drawing the predetermined content.

4. The information processing system according to any one of claims 1 to 3 further comprising an estimation unit that estimates, for each display that has possibility of serving as a reference for drawing, a connection relationship for drawing according to width-first search from the display, from connection relationships of the plurality of displays, wherein the storage unit stores the connection relationship for drawing estimated by the estimation unit.

5. The information processing system according to any one of claims 1 to 3 further comprising an estimation unit that estimates, for each display that has possibility of serving as a reference for drawing, a connection relationship for drawing according to shortest route search from the display, from connection relationships of the plurality of displays, wherein the storage unit stores the connection relationship for drawing estimated by the estimation unit.

6. An information processing apparatus comprising:

   a storage unit that stores, for each display that has possibility of serving as a reference for drawing from among a plurality of displays, a connection relationship for drawing with another display connected to the display;

a selecting unit that selects, upon reception of an instruction to draw predetermined content from communication equipment, a display that serves as a reference for drawing the predetermined content;

a determination unit that determines a connection relationship with another display connected upon drawing to the display selected by the selecting unit according to the connection relationship for drawing stored in the storage unit;

a dividing unit that divides an image of the predetermined content into images displayed on the respective displays according to the connection relationship determined by the determination unit; and

a drawing unit that causes the respective images obtained by being divided by the dividing unit to be drawn on the plurality of displays, according to the connection relationship.

7. An information processing method causing a computer to execute processes of:

selecting upon reception of an instruction to draw predetermined content from the communication equipment, a display that serves as a reference for drawing the predetermined content;

determining, for each display that has possibility of being a reference for drawing from among a plurality of displays, a connection relationship with another display connected upon drawing to the display selected by the selecting unit, according to the connection relationship for drawing stored in a storage unit that stores the connection relationship for drawing with another display connected to the display;

dividing an image of the predetermined content into images to be displayed on the respective of displays according to the connection relationship determined; and

causing the respective images divided to be drawn on the plurality of displays according to the connection relationship.

# FIG. 1

# FIG. 2

# FIG. 3

11

| ID | SIZE |
|----|------|
| DisplayA | {width: 800, height: 600} |
| DisplayB | {width: 800, height: 600} |
| DisplayC | {width: 800, height: 800} |

11a   11b

# FIG. 4

12

| | 12a | 12b | 12c | 12d | 12e | 12f | 12g |
|---|---|---|---|---|---|---|---|
| ID | CONNECTION SOURCE | POINT a | POINT b | CONNECTION DESTINATION | POINT a' | POINT b' |
| CONNECTION 1 | DisplayA | {x: 800, y: 0} | {x: 800, y: 600} | DisplayB | {x: 0, y: 0} | {x: 0, y: 600} |
| CONNECTION 2 | DisplayA | {x: 0, y: 600} | {x: 800, y: 600} | DisplayC | {x: 0, y: 0} | {x: 800, y: 0} |
| CONNECTION 3 | DisplayB | {x: 0, y: 600} | {x: 800, y: 600} | DisplayC | {x: 800, y: 0} | {x: 800, y: 800} |

(0, 0)     (800, 0)     X

(0, 0)     (800, 0)     X

DisplayA
(800x600)

CONNECTION 1

DisplayB
(800x600)

y
(0, 600)     (800, 600)

y
(0, 600)     (800, 600)

CONNECTION 2

(0, 0)     (800, 0)     X

DisplayC
(800x800)

CONNECTION 3

y
(800, 800)

# FIG. 5

13

| PRIMARY | CONNECTION FOR DRAWING |
|---------|------------------------|
| DisplayA | CONNECTION 1, CONNECTION 2 |
| DisplayB | CONNECTION 1, CONNECTION 3 |
| DisplayC | CONNECTION 2, CONNECTION 3 |

13a 13b

# FIG. 6

14

| 14a | 14b | 14c | 14d | 14e | 14f |
|---|---|---|---|---|---|
| ID | PRIMARY | LOCATION | CONNECTION FOR DRAWING | SIZE | ROTATION AMOUNT |
| CONTENT 1 | DisplayA | {x: 200, y: 200} | CONNECTION 1, CONNECTION 2 | {width: 800, height: 600} | 0 |

# FIG. 7

# FIG. 8A

DisplayA
(800x600)

(200,200)

CONTENT 1

CONNECTION 1

DisplayB
(800x600)

CONNECTION 2

DisplayC
(800x800)

CONNECTION 3

14

| 14a | 14b | 14c | 14d | 14e | 14f |
|-----|-----|-----|-----|-----|-----|
| ID | PRIMARY | LOCATION | CONNECTION FOR DRAWING | SIZE | ROTATION AMOUNT |
| CONTENT 1 | DisplayA | {x: 200, y: 200} | | {width: 800, height: 600} | 0 |

⇧

INSTRUCTION TO GENERATE CONTENT

## FIG. 8B

Table 13 (13b):

| PRIMARY | CONNECTION FOR DRAWING |
|---|---|
| DisplayA | CONNECTION 1, CONNECTION 2 |
| DisplayB | CONNECTION 1, CONNECTION 3 |
| DisplayC | CONNECTION 2, CONNECTION 3 |

Table 14:

| ID (14a) | PRIMARY (14b) | LOCATION (14c) | CONNECTION FOR DRAWING (14d) | SIZE (14e) | ROTATION AMOUNT (14f) |
|---|---|---|---|---|---|
| CONTENT 1 | DisplayA | {x: 200, y: 200} | CONNECTION 1, CONNECTION 2 | {width: 800, height: 600} | 0 |

## FIG. 8C

# FIG. 9

DisplayA
(800x600)

CONTENT 1

CONNECTION 1

DisplayB
(800x600)

CONNECTION 2

DisplayC
(800x800)

CONNECTION 3

# FIG. 10

STATE BEFORE CONTENT MOVES

STATE AFTER CONTENT HAS MOVED

# FIG. 11

PRIMARY DISPLAY IS
CHANGED FROM A TO B

⇩ 13

↙13b

| PRIMARY | CONNECTION FOR DRAWING |
|---|---|
| DisplayA | CONNECTION 1, CONNECTION 2 |
| DisplayB | CONNECTION 1, CONNECTION 3 |
| DisplayC | CONNECTION 2, CONNECTION 3 |

14

| ID | PRIMARY | LOCATION | CONNECTION FOR DRAWING | SIZE | ROTATION AMOUNT |
|---|---|---|---|---|---|
| CONTENT 1 | DisplayB | {x: 200, y: 200} | CONNECTION 1, CONNECTION 3 | {width: 800, height: 600} | 0 |

⇩

DisplayA  DisplayB

CONTENT 1

DisplayC

⇩

CONNECTION 1

DisplayA  DisplayB

CONTENT 1   1

E_A   E_B

CONNECTION 2   E_C

CONNECTION 3

DisplayC

DisplayA  DisplayB

DisplayC

# FIG. 12

START

HAS INSTRUCTION TO DRAW
CONTENT BEEN RECEIVED? — S11

NO

YES — S12

GENERATE DRAWN IMAGE OF INSTRUCTED CONTENT

S13

SELECT PRIMARY DISPLAY ACCORDING TO
INSTRUCTION

S14

DETERMINE CONNECTION FOR DRAWING FROM
PRIMARY DISPLAY

S15

CALCULATE DISPLAY REGION IN EACH DISPLAY FROM
CONNECTION FOR DRAWING

S16

DIVIDE DRAWN IMAGE OF CONTENT ACCORDING TO
DISPLAY REGION OF EACH DISPLAY

S17

TRANSMIT EACH DIVIDED DRAWN IMAGE

S18

PERFORM DRAWING ACCORDING TO INFORMATION
RECEIVED BY DISPLAY

END

# FIG. 13

```
                    ┌──────────────┐
                    │    START     │
                    └──────┬───────┘
                           ▼
         ┌─────────────────────────────────────┐  S21
   NO    │   HAS OPERATION TO MOVE             │
 ◄───────┤   CONTENT BEEN PERFORMED?          │
         └─────────────────┬───────────────────┘
                           │ YES              S22
                           ▼
    ┌──────────────────────────────────────────┐
    │ CALCULATE LOCATION AFTER CONTENT HAS MOVED │
    └──────────────────┬───────────────────────┘
                       ▼                       S23
    ┌──────────────────────────────────────────┐
    │ ESTIMATE PRIMARY DISPLAY FROM LOCATION OF  │
    │   CONTENT AFTER CONTENT HAS MOVED          │
    └──────────────────┬───────────────────────┘
                       ▼                       S24
    ┌──────────────────────────────────────────┐
    │ DETERMINE CONNECTION FOR DRAWING FROM      │
    │           PRIMARY DISPLAY                  │
    └──────────────────┬───────────────────────┘
                       ▼                       S25
    ┌──────────────────────────────────────────┐
    │ CALCULATE DISPLAY REGION IN EACH DISPLAY   │
    │ FROM CONNECTION FOR DRAWING                │
    └──────────────────┬───────────────────────┘
                       ▼                       S26
    ┌──────────────────────────────────────────┐
    │ DIVIDE DRAWN IMAGE OF CONTENT ACCORDING TO │
    │ DISPLAY REGION OF EACH DISPLAY             │
    └──────────────────┬───────────────────────┘
                       ▼                       S27
    ┌──────────────────────────────────────────┐
    │     TRANSMIT EACH DIVIDED DRAWN IMAGE      │
    └──────────────────┬───────────────────────┘
                       ▼                       S28
    ┌──────────────────────────────────────────┐
    │ PERFORM DRAWING ACCORDING TO INFORMATION   │
    │        RECEIVED BY DISPLAY                 │
    └──────────────────┬───────────────────────┘
                       ▼
                ┌──────────────┐
                │     END      │
                └──────────────┘
```

# FIG. 14

9

| 3 | INFORMATION PROCESSING APPARATUS | 1 |

COMMUNICATION EQUIPMENT — 3

INFORMATION PROCESSING APPARATUS — 1

DISPLAY INFORMATION — 11

CONNECTION INFORMATION — 12

PRIMARY DISPLAY INFORMATION — 13

CONTENT LOCATION INFORMATION — 14

CONTENT DRAWING INSTRUCTION UNIT — 31

PRIMARY DISPLAY SELECTING UNIT — 16

DRAWING DISPLAY CONNECTION ESTIMATION UNIT — 17A

DRAWING LOCATION CALCULATION UNIT — 18

CONTENT EXECUTION UNIT — 15

DRAWING DIVIDING UNIT — 19

DISPLAY — 2

INPUT RECEIVING UNIT — 21

CONTENT DRAWING UNIT — 22

...

DISPLAY — 2

INPUT RECEIVING UNIT — 21

CONTENT DRAWING UNIT — 22

DISPLAY — 2

INPUT RECEIVING UNIT — 21

CONTENT DRAWING UNIT — 22

FIG. 15

| PRIMARY | CONNECTION FOR DRAWING |
|---------|------------------------|
| A | CONNECTION 1, CONNECTION 2 |

| PRIMARY | CONNECTION FOR DRAWING |
|---------|------------------------|
| A | CONNECTION 1, CONNECTION 2, CONNECTION 4, CONNECTION 5 |

| PRIMARY | CONNECTION FOR DRAWING |
|---------|------------------------|
| A | CONNECTION 1, CONNECTION 2, CONNECTION 4, CONNECTION 5 |
| B | CONNECTION 1, CONNECTION 3, CONNECTION 5, CONNECTION 4 |
| C | CONNECTION 2, CONNECTION 3, CONNECTION 4, CONNECTION 5 |
| D | CONNECTION 4, CONNECTION 6, CONNECTION 2, CONNECTION 3 |

## FIG. 16

2(CONNECTION 5)

5(CONNECTION 1)

3(CONNECTION 3)

0(CONNECTION 2)

3(CONNECTION 4)

1(CONNECTION 6)

| PRIMARY | CONNECTION FOR DRAWING |
|---|---|
| A | CONNECTION 2, CONNECTION 3, CONNECTION 5, CONNECTION 4 |

| PRIMARY | CONNECTION FOR DRAWING |
|---|---|
| A | CONNECTION 1, CONNECTION 2, CONNECTION 4, CONNECTION 5 |
| B | CONNECTION 3, CONNECTION 2, CONNECTION 5, CONNECTION 6 |

# FIG. 17

COMPUTER 200

HDD 205
INFORMATION PROCESSING INFORMATION 205a
INFORMATION PROCESSING RELATED INFORMATION 205b

211

MEMORY 201

DRIVE DEVICE 213

CPU 203

DISPLAY CONTROL UNIT 207

INPUT DEVICE 215

COMMUNICATION CONTROL UNIT 217

219

DISPLAY DEVICE 209

TO NETWORK

# FIG. 18

**INTERNATIONAL SEARCH REPORT**

| International application No. |
|---|
| PCT/JP2018/001972 |

| A. CLASSIFICATION OF SUBJECT MATTER |
|---|
| Int.Cl. G09G5/00(2006.01)i, G06F3/14(2006.01)i, G09G5/36(2006.01)i |

According to International Patent Classification (IPC) or to both national classification and IPC

| B. FIELDS SEARCHED |
|---|
| Minimum documentation searched (classification system followed by classification symbols) |
| Int.Cl. G09G5/00, G06F3/14, G09G5/36 |

| Documentation searched other than minimum documentation to the extent that such documents are included in the fields searched | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | JP 2009-116274 A (CANON INC.) 28 May 2009, paragraphs [0011]-[0063], [0067]-[0086], fig. 1-19 (Family: none) | 1-2, 4, 6, 7 |
| A | JP 2009-288453 A (CANON INC.) 10 December 2009, entire text, all drawings (Family: none) | 1-7 |
| A | JP 2005-173291 A (CANON INC.) 30 June 2005, entire text, all drawings (Family: none) | 1-7 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 April 2018 (06.04.2018) | 17 April 2018 (17.04.2018) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2018/001972

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2016-225694 A (FUNTEC CO.) 28 December 2016, entire text, all drawings (Family: none) | 1-7 |
| A | JP 2009-169885 A (NATIONAL INSTITUTE OF ADVANCED INDUSTRIAL SCIENCE AND TECHNOLOGY) 30 July 2009, entire text, all drawings (Family: none) | 1-7 |
| A | US 2014/0132833 A1 (HULU, LLC) 15 May 2014, entire text, all drawings & WO 2014/071635 A1 | 1-7 |
| A | US 2016/0139867 A1 (SAMSUNG ELECTRONICS CO., LTD.) 19 May 2016, entire text, all drawings & KR 10-2016-0058498 A | 1-7 |
| A | US 2016/0155410 A1 (SAMSUNG ELECTRONICS CO., LTD.) 02 June 2016, entire text, all drawings & WO 2014/208874 A1 & KR 10-2015-0000783 A | 1-7 |
| A | JP 2015-121574 A (MITSUBISHI ELECTRIC CORP.) 02 July 2015, entire text, all drawings (Family: none) | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009025466 A
- JP 2003280622 A
- JP 2003280783 A

**Non-patent literature cited in the description**

- **S. LZADI et al.** Dynamo: a public interactive surface supporting the cooperative sharing and exchange of media. *In Proc. of UIST' 03. ACM,* 2003, 159-168